# EUROPÄISCHE PATENTANMELDUNG

(11) **EP 4 467 333 A1**
(43) Veröffentlichungstag der Anmeldung: **27.11.2024**
(21) Anmeldenummer: 24177605.3
(22) Anmeldetag: 23.05.2024
(51) Int. Cl.: B31F 1/26, B31F 1/28, B31F 1/24, B24B 19/02, B23C 3/32

(54) **RIFFELWALZEN-HERSTELL-VERFAHREN, RIFFELWALZEN-HERSTELL-VORRICHTUNG UND RIFFELWALZE**

(30) Priorität: 26.05.2023 DE 102023204993
(71) Anmelder: BHS Corrugated Maschinen- und Anlagenbau GmbH, 92729 Weiherhammer (DE)
(72) Erfinder: Schell, Markus, 92637 Weiden (DE); Berndt, Christian, 92253 Schnaittenbach (DE)

(57) **Zusammenfassung**

Die Erfindung betrifft ein Verfahren und eine Vorrichtung (12) zum Herstellen einer Riffelwalze mit einer Riffelzähne (7) aufweisenden Riffelwalzen-Schrägverzahnung. Das Verfahren umfasst die Schritte Bereitstellen eines Riffelwalzen-Rohlings (1) mit einer Riffelwalzen-Rohling-Mittellängsachse (3) und Bearbeiten des Riffelwalzen-Rohlings (1) mittels einer mindestens eine Bearbeitungseinrichtung (16) aufweisenden Bearbeitungsvorrichtung (12) bei einer Relativverlagerung zwischen dem Riffelwalzen-Rohling (1) und der mindestens einen Bearbeitungseinrichtung (16) unter Erzeugung der Riffelwalzen-Schrägverzahnung. Die Erfindung betrifft ferner eine Riffelwalze mit einer Riffelwalzen-Schrägverzahnung.

## Beschreibung

Die vorliegende Anmeldung betrifft ein Verfahren und eine Vorrichtung zum Herstellen einer Riffelwalze mit einer Riffelzähne aufweisenden Riffelwalzen-Schrägverzahnung, insbesondere für eine Wellpappeanlage.

Aus dem Stand der Technik sind Wellpappebahnen mit sich schneidenden Wellungen bzw. Riffelungen und entsprechende Vorrichtungen zu deren Herstellung bekannt. Die Riffelwalzen dieser Vorrichtungen weisen dazu im Allgemeinen Schrägverzahnungen auf. Die Herstellung solcher Riffelwalzen ist schwierig und aufwendig.

Der vorliegenden Anmeldung liegt die Aufgabe zugrunde, ein Verfahren sowie eine Vorrichtung zum Herstellen einer Riffelwalze mit einer Riffelwalzen-Schrägverzahnung bereitzustellen, das die genannten Nachteile des Stands der Technik überwindet. Insbesondere soll ein Verfahren zum Herstellen einer Riffelwalze mit einer Riffelwalzen-Schrägverzahnung geschaffen werden, das vergleichsweise einfach und äußerst effizient ist.

Diese Aufgabe wird insbesondere durch die in dem unabhängigen Anspruch 1 angegebenen Merkmale und die im unabhängigen Anspruch 16 angegebene Merkmale gelöst. Die in der vorliegenden Anmeldung beschriebenen Verfahren und Vorrichtungen ermöglichen es ferner, eine Riffelwalze gemäß den Merkmalen des unabhängigen Anspruchs 21 herzustellen, die eine verbesserte Riffelwalzen-Schrägverzahnung aufweist und mit der die Herstellung von Wellpappenbahnen verbessert wird. Der Kern der hierin beschriebenen Erfindung liegt in einer Relativverlagerung zwischen einem Riffelwalzen-Rohling und einer Bearbeitungseinrichtung für die Erzeugung der Riffelwalzen-Schrägverzahnung.

Der Riffelwalzen-Rohling weist beispielsweise eine glatte, unstrukturierte Mantelfläche auf. Alternativ hat er bevorzugt bereits eine Rohverzahnung, insbesondere Roh-Schrägverzahnung. Der Riffelwalzen-Rohling ist einteilig oder mehrteilig. Beispielsweise ist er hohl.

Die mindestens eine Bearbeitungseinrichtung ist zum Beispiel antreibbar, wie drehantreibbar. Es ist zweckmäßig, wenn die mindestens eine Bearbeitungseinrichtung mindestens einen Bearbeitungsantrieb aufweist oder der mindestens einen Bearbeitungseinrichtung mindestens ein derartiger Bearbeitungsantrieb zugeordnet ist. Der mindestens eine Bearbeitungsantrieb ist dann bevorzugt ein Rotations-Bearbeitungsantrieb. Die mindestens eine Bearbeitungseinrichtung ist zum Beispiel geführt, insbesondere um mindestens einen Riffelzahn und/oder mindestens ein Riffeltal über dessen Länge zu erzeugen. Beispielsweise ist mindestens eine Bearbeitungseinrichtung imstande, zur Erzeugung der Riffelwalzen-Schrägverzahnung Material auf den Riffelwalzen-Rohling aufzutragen und/oder von diesem abzutragen. Sie ist günstigerweise imstande, eine Grob- und/oder Feinbearbeitung an dem Riffelwalzen-Rohling durchzuführen. Beispielweise kommt eine Bearbeitungseinrichtung oder kommen mehrere, insbesondere identisch ausgebildete, Bearbeitungseinrichtungen zum Einsatz, die zum Beispiel in Längsrichtung und/oder Umfangsrichtung des Riffelwalzen-Rohlings versetzt zueinander angeordnet sind. Die mindestens eine Bearbeitungseinrichtung hat zum Beispiel mindestens einen Negativ(form)bereich in Bezug auf die Riffelwalzen-Schrägverzahnung, insbesondere von mindestens einem Riffelzahn und/oder Riffeltal derselben, der bei der Bearbeitung wirksam ist.

Es ist zweckmäßig, wenn mindestens ein Verlagerungsantrieb für die Relativverlagerung zwischen dem Riffelwalzen-Rohling und der mindestens einen Bearbeitungseinrichtung sorgt, um insbesondere mindestens einen Riffelzahn und/oder mindestens ein Riffeltal über dessen Länge zu erzeugen. Der mindestens eine Verlagerungsantrieb ist beispielsweise ein Elektroantrieb, ein Pneumatikantrieb und/oder Hydraulikantrieb. Für die Relativbewegung wird der Riffelwalzen-Rohling und/oder die mindestens eine Bearbeitungseinrichtung verlagert.

Es ist von Vorteil, wenn mindestens ein Schwenkantrieb für eine Relativ-Schwenkverlagerung zwischen dem Riffelwalzen-Rohling und der mindestens einen Bearbeitungseinrichtung sorgt. Der mindestens eine Schwenkantrieb ist beispielsweise ein Elektroantrieb, ein Pneumatikantrieb und/oder Hydraulikantrieb. Für die Relativ-Schwenkbewegung wird der Riffelwalzen-Rohling und/oder die mindestens eine Bearbeitungseinrichtung verlagert. Für diese wird insbesondere der Riffelwalzen-Rohling (passgenau) zu einem Schrägungswinkel der Riffelwalzen-Schrägverzahnung verschwenkt, damit der mindestens eine zu erzeugende Riffelzahn zumindest zeitweise, bevorzugt immer, lotrecht zu einer Mitte des Riffelwalzen-Rohlings steht.

Die Riffelwalzen-Schrägverzahnung hat günstigerweise abwechselnd Riffelzähne und Riffeltäler. Es ist zweckmäßig, wenn die Riffelzähne jeweils identisch ausgeführt sind. Bevorzugt sind die Riffeltäler identisch ausgebildet. Es ist von Vorteil, wenn die Riffelzähne und/oder Riffeltäler jeweils symmetrisch ausgebildet sind. Die Riffelwalzen-Schrägverzahnung hat bevorzugt Köpfe und Füße. Es ist zweckmäßig, wenn jeder Riffelzahn Flanken aufweist bzw. durch Flanken begrenzt ist. Die Riffelwalzen-Schrägverzahnung bildet bevorzugt eine Oberflächen-Schrägverzahnung. Es ist zweckmäßig, wenn die Riffelzähne und/oder Riffeltäler zu der Riffelwalzen-Mittellängsachse jeweils einen Schrägungswinkel einschließen, der zwischen 0,5° und 8° liegt.

Die Riffelwalze hat bevorzugt eine Riffelwalzen-Mittellängsachse und eine Riffelwalzen-Umfangsrichtung. Sie weist vorzugsweise eine axiale Länge auf, die zwischen 100 cm und 400 cm liegt. Bevorzugt reicht ein Durchmesser der Riffelwalze von 10 cm bis 60 cm. Es ist zweckmäßig, wenn die Riffelwalze zu ihrer Lagerung endseitig Lagerzapfen hat. Die fertige Riffelwalze ist bevorzugt gehärtet bzw. Oberflächen-behandelt.

Vorzugsweise bilden zwei Riffelwalzen eine Riffeleinrichtung zum Riffeln einer, insbesondere endlosen, Materialbahn. Sie kämmen bevorzugt miteinander bzw. greifen ineinander ein. Im Betrieb greifen günstigerweise die Riffelzähne einer ersten Riffelwalze in die Riffeltäler einer zweiten Riffelwalze ein, während die Riffelzähne der zweiten Riffelwalze in die Riffeltäler der ersten Riffelwalze eingreifen. Hierdurch wird die durch einen zwischen den Riffelwalzen begrenzten Riffelspalt bzw. Walzenspalt hindurchgeführte ursprünglich glatte Materialbahn bleibend verformt. Vorzugsweise ist mindestens eine Riffelwalze beheizbar. Es ist zweckmäßig, wenn die Materialbahn aus Pappe, Papier oder dergleichen besteht.

Steigungsrichtungen der Schrägverzahnungen der Riffeleinrichtung sind günstigerweise einander entgegengesetzt. Beispielsweise sind die ersten Riffelzähne der ersten Riffelwalze linkssteigend, während die zweiten Riffelzähne der zweiten Riffelwalze rechtssteigend sind.

Es ist zweckmäßig, wenn eine die Riffeleinrichtung aufweisende Vorrichtung außerdem eine Leimauftragseinrichtung zum Auftragen von Leim auf Spitzen einer Wellung/Riffelung der Materialbahn umfasst. Es ist von Vorteil, wenn die Vorrichtung ferner eine Anpresseinrichtung zum Anpressen einer Deckbahn an die mit Leim versehenen Spitzen der Materialbahn aufweist. Die Vorrichtung ist bevorzugt imstande, eine einseitig kaschierte Wellpappebahn herzustellen.

Weitere vorteilhafte Ausgestaltungen der Erfindung sind in den Unteransprüchen angegeben.

Das Verfahren gemäß dem Unteranspruch 2 ist äußerst funktionssicher und wirtschaftlich. Das Ausrichten des Riffelwalzen-Rohlings und der mindestens einen Bearbeitungseinrichtung zueinander erfolgt beispielsweise händisch oder maschinell, insbesondere automatisiert. Der Riffelwalzen-Rohling und/oder die mindestens eine Bearbeitungseinrichtung wird entsprechend ausgerichtet.

Das Verfahren gemäß dem Unteranspruch 3 ist zum Beispiel imstande, eine Riffelwalze mit einer Riffelwalzen-Bombage auszustatten bzw. zu erzeugen. Eine solche Riffelwalze weist einen von ihren beiden Enden her zur Mitte hin stetig zunehmenden Durchmesser auf. Ein Linienanpressdruck ist so zum Beispiel zwischen den Riffelwalzen der Riffeleinrichtung über die gesamte Breite aufrechterhaltbar. Alternativ oder zusätzlich ist durch entsprechendes radiales Verlagern bevorzugt eine Durchhangskompensation in Bezug auf den Riffelwalzen-Rohling bei dessen Bearbeitung möglich.

Es ist zweckmäßig, wenn gemäß dem Unteranspruch 4, 5 der mindestens eine, zum Beispiel linienartige, Angriffsbereich der mindestens einen Bearbeitungseinrichtung bei der Bearbeitung des Riffelwalzen-Rohlings zum Beispiel an mindestens einer, beispielsweise rinnenartigen, Vertiefung ausgebildet ist, die (im Wesentlichen) komplementär zu mindestens einem Riffelzahn ist. Die mindestens eine Vertiefung ist vorzugsweise (im Querschnitt) asymmetrisch. Beispielsweise haben die eine Vertiefung begrenzenden Backen der jeweiligen Bearbeitungseinrichtung unterschiedliche (axiale) Breiten. Insbesondere steht die mindestens eine Bearbeitungseinrichtung zumindest zeitweise, bevorzugt stets, genau senkrecht zu/über einem Mittelpunkt der Riffelwalzen-Rohling-Mittelachse, sodass der mindestens eine Angriffsbereich zumindest zeitweise, bevorzugt stets, senkrecht zu/unter einer jeweiligen Bearbeitungs-Rotationsachse steht.

Bei dem Verfahren gemäß dem Unteranspruch 6 ist der Riffelwalzen-Rohling bevorzugt in einer Halteeinrichtung der Bearbeitungsvorrichtung gehalten, die beispielsweise um eine vertikale Achse zum entsprechenden Schrägstellen des Riffelwalzen-Rohlings verschwenkbar ist. Die Halteeinrichtung ist vorzugsweise von einem Gestell der Bearbeitungsvorrichtung gehalten. Die Halteeinrichtung bzw. der Riffelwalzen-Rohling erstreckt sich während der Bearbeitung des Riffelwalzen-Rohlings bevorzugt schräg zu einer Bearbeitungsvorrichtungs-Hauptebene bzw. -Nullebene. Es ist zweckmäßig, wenn die Bearbeitungsvorrichtung mindestens eine Führung, insbesondere Gerad-Führung, zur direkten oder indirekten Führung der mindestens einen Bearbeitungseinrichtung aufweist. Die mindestens eine Führung erstreckt sich bevorzugt in der Bearbeitungsvorrichtungs-Hauptebene bzw. -Nullebene bzw. parallel zu dieser. Der Riffelwalzen-Rohling und die mindestens eine Bearbeitungseinrichtung werden bei der Bearbeitung günstigerweise relativ zueinander verschwenkt.

Bei dem Verfahren gemäß dem Unteranspruch 7 ist die mindestens eine Bearbeitungseinrichtung beispielsweise in ihrer Gesamtheit entsprechend verstellbar bzw. schräg stellbar. Der Riffelwalzen-Rohling ist bevorzugt in einer Halteeinrichtung der Bearbeitungsvorrichtung gehalten. Die Halteeinrichtung ist vorzugsweise von einem Gestell der Bearbeitungsvorrichtung gehalten. Die Halteeinrichtung bzw. der Riffelwalzen-Rohling erstreckt sich während der Bearbeitung des Riffelwalzen-Rohlings bevorzugt in einer Bearbeitungsvorrichtungs-Hauptebene bzw. -Nullebene bzw. parallel zu dieser. Es ist zweckmäßig, wenn die Bearbeitungsvorrichtung mindestens eine Führung, insbesondere Gerad-Führung, zur direkten oder indirekten Führung der mindestens einen Bearbeitungseinrichtung aufweist. Die mindestens eine Führung erstreckt sich bevorzugt in der Bearbeitungsvorrichtungs-Hauptebene bzw. -Nullebene bzw. parallel zu dieser. Die mindestens eine Bearbeitungseinrichtung verläuft vorzugsweise schräg zu der Bearbeitungsvorrichtungs-Hauptebene bzw. -Nullebene. Der Riffelwalzen-Rohling und die mindestens eine Bearbeitungseinrichtung werden bei der Bearbeitung günstigerweise relativ zueinander verschwenkt.

Die Schleifeinrichtung gemäß dem Unteranspruch 9 ist vorzugsweise als Schleifscheibe ausgeführt. Es ist zweckmäßig, wenn diese für einen Schleifvorgang, wie durch einen Bearbeitungsantrieb, drehantreibbar ist.

Die Fräseinrichtung gemäß dem Unteranspruch 10 umfasst bevorzugt ein Fräselement. Es ist zweckmäßig, wenn dieses für einen Fräsvorgang, wie durch einen Bearbeitungsantrieb, drehantreibbar ist.

Die Fräseinrichtung gemäß dem Unteranspruch 11 ist günstigerweise während des Fräsvorgangs über mindestens drei, bevorzugt fünf, Achsen beweglich. Mehrere Seiten sind so beispielsweise an dem Riffelwalzen-Rohling zur Erzeugung der Riffelwalzen-Schrägverzahnung bearbeitbar. Die Simultanfräseinrichtung umfasst bevorzugt einen Fräskopf.

Die Fräseinrichtung gemäß dem Unteranspruch 12 weist vorzugsweise eine Frässchnecke auf. Es ist zweckmäßig, wenn vor einem Härten eine Schruppbearbeitung und danach eine Schlichtbearbeitung erfolgt. Alternativ oder zusätzlich kann ein Läppen stattfinden.

Die Auftragseinrichtung gemäß dem Unteranspruch 13 ist imstande, durch gezielten, wie linienförmigen, Materialauftrag die Riffelwalzen-Schrägverzahnung, insbesondere Riffelzähne, zum Beispiel sukzessiv, zu erzeugen.

Das Verfahren gemäß dem Unteranspruch 14 trägt durch Laserstrahlung Material gezielt ab.

Es ist von Vorteil, wenn bei dem Verfahren gemäß dem Unteranspruch 15 Material abgetragen wird. Die Bearbeitung findet bevorzugt in/mit einem elektrisch nichtleitenden Medium statt, wie Öl oder deionisiertes Wasser. Günstigerweise sind mindestens eine Erodier-Bearbeitungseinrichtung und der Riffelwalzen-Rohling bei dem Erodieren beabstandet zueinander angeordnet. Die mindestens eine Bearbeitungseinrichtung und der Riffelwalzen-Rohling stehen bevorzugt mit einer elektrischen Stromquelle in stromleitender Verbindung. Das Erodieren wird zum Beispiel zur Erzeugung der Riffelwalzen-Schrägverzahnung eingesetzt. Alternativ wird es für eine nachträgliche Bearbeitung bzw. Behandlung des Riffelwalzen-Rohlings nach einer ersten Erzeugung einer Riffelwalzen-Schrägverzahnung verwendet.

In einer bevorzugten Weiterbildung der Vorrichtung zum Bearbeiten einer Riffelwalze mit einer Riffelzähne aufweisenden Riffelwalzen-Schrägverzahnung, weist diese auf:
eine Halteeinrichtung zum Halten eines Riffelwalzen-Rohlings mit einer Riffelwalzen-Rohling-Mittellängsachse; und
eine Bearbeitungseinrichtung zum Erzeugen der Riffelwalzen-Schrägverzahnung, wobei die Halteeinrichtung und / oder die Bearbeitungseinrichtung eingerichtet sind, die Riffelwalzen-Schrägverzahnung bei einer Relativverlagerung zwischen dem Riffelwalzen-Rohling und der Bearbeitungseinrichtung zu erzeugen.

In einer bevorzugten Weiterbildung der Vorrichtung, ist die Halteeinrichtung eingerichtet, den Riffelwalzen-Rohling während der Bearbeitung an dessen Lagerzapfen zu halten, vorzugsweise dabei derart, dass sich der Riffelwalzen-Rohling horizontal erstreckt.

In einer bevorzugten Weiterbildung der Vorrichtung, weist die Vorrichtung ferner einen Schwenkantrieb auf, der mit dem Riffelwalzen-Rohling in direkter oder indirekter Antriebsverbindung steht und eingerichtet ist, den Riffelwalzen-Rohling, bevorzugt kontinuierlich, während der Bearbeitung in einer Umfangsrichtung um die Riffelwalzen-Rohling-Mittellängsachse zu schwenken.

In einer bevorzugten Weiterbildung der Vorrichtung umfasst die Vorrichtung ferner eine Schrägstelleinrichtung zum Verkippen des Riffelwalzen-Rohling senkrecht zu seiner Riffelwalzen-Rohling-Mittellängsachse.

In einer bevorzugten Weiterbildung der Vorrichtung steht die Schrägstelleinrichtung mit der Halteeinrichtung in direkter oder indirekter Antriebsverbindung und ist dazu eingerichtet, den Riffelwalzen-Rohling gegenüber der vertikalen Bearbeitungsvorrichtungs-Hauptebene schrägzustellen, und wobei die Schrägstelleinrichtung vorzugsweise einen Schrägstellantrieb umfasst.

In einer bevorzugten Weiterbildung der Vorrichtung, umfasst die Bearbeitungseinrichtung eine Schleifscheibe, die um eine zentrale Rotationsachse drehantreibbar ist und an ihrem freien Umfangsbereich mindestens einen Schleifvorsprung umfasst, wobei der Schleifvorsprung einen abgerundeten äußeren Schleifkopf umfasst, der bezogen auf die Rotationsachse konvex gekrümmt ist.

In einer bevorzugten Weiterbildung der Vorrichtung, umfasst die Schleifscheibe mindestens zwei benachbart zueinander angeordnete, Schleifvorsprünge, die jeweils umlaufend sind und sich um die Rotationsachse erstrecken. Zusätzlich oder alternativ ("und / oder") umfasst die Schleifscheibe eine oder mehrere umlaufende Schleifrinnen mit einem jeweiligen abgerundeten inneren Grund, wobei sich die eine oder mehreren Schleifrinnen zu ihrem jeweiligen Grund verjüngt, und der jeweilige Grund bezogen auf die Rotationsachse konkav gekrümmt ist.

In einer bevorzugten Weiterbildung der Vorrichtung, ist die wenigstens eine umlaufende Schleifrinne und / oder der wenigstens eine umlaufende Schleifvorsprung asymmetrisch ausgeführt, um eine Hinterschneidung an der Schrägverzahnung der Riffelwalze zu kompensieren.

In einer bevorzugten Weiterbildung der Vorrichtung umfasst die Vorrichtung ferner einen Verlagerungsantrieb, der mit der Schleifscheibe in direkter oder indirekter Antriebsverbindung steht und der dazu eingerichtet ist, die Schleifscheibe in Bezug auf die Riffelwalzen-Rohling-Mittellängsachse radial zu verlagern, insbesondere geführt radial zu verlagern, um dadurch eine Durchhangskompensation durchzuführen und / oder die Riffelwalze mit einer Riffelwalzen-Bombage auszustatten.

Die erfindungsgemäße Riffelwalze zur Herstellung von Wellpappenbahnen umfasst einen zylindrischen Riffelwalzenkörper; und eine Riffelzähne und Riffeltäler aufweisende Riffelwalzen-Schrägverzahnung, wobei die Riffelzähne und Riffeltäler mit einer Mittellängsachse der Riffelwalze einen Schrägungswinkel einschließen, der zwischen 0,5° und 8° liegt und so eine Außen-Schrägverzahnung bildet.

In einer bevorzugten Weiterbildung der Riffelwalze, verlaufen benachbarte Riffelzähne parallel zueinander und weisen einen identischen Abstand in einer Umfangsrichtung zueinander auf, und wobei die Riffelzähne bevorzugt identisch ausgeführt und gleichmäßig über den Umfang der Riffelwalze verteilt sind und / oder wobei sich benachbarte Riffeltäler parallel zueinander erstrecken und einen identischen Abstand in der Umfangsrichtung zueinander aufweisen, und wobei die Riffeltäler vorzugsweise identisch ausgebildet und gleichmäßig über den Umfang der Riffelwalze verteilt sind.

In einer bevorzugten Weiterbildung der Riffelwalze , weist jeder Riffelzahn eine erste Flanke und eine der ersten Flanke gegenüberliegende zweite Flanke sowie einen dazwischen angeordneten Kopf auf, wobei jeder Kopf bezogen auf die Mittellängsachse der Riffelwalze konvex gekrümmt ist.

In einer bevorzugten Weiterbildung der Riffelwalze, weist jeder Kopf eine konstante Krümmung auf und die ersten und zweiten Flanken verlaufen im Wesentlichen zumindest bereichsweise gerade und wobei die Riffeltäler bezogen auf die Mittellängsachse konkav gekrümmt sind und jeweils eine konstante Krümmung aufweisen.

In einer bevorzugten Weiterbildung der Riffelwalze wurde die Riffelwalzen-Schrägverzahnung mit dem Verfahren gemäß einer der in diesem Dokument beschriebenen Ausführungsformen und / oder der Vorrichtung gemäß einer der in diesem Dokument beschriebenen Ausführungsformen erzeugt.

Die erfindungsgemäße Vorrichtung zur Herstellung von Wellpappenbahnen weist auf: eine erste Riffelwalze gemäß einer der in diesem Dokument beschriebenen Ausführungsformen und eine zweite Riffelwalze gemäß einer der in diesem Dokument beschriebenen Ausführungsformen, wobei die Riffelzähne der ersten Riffelwalze in die Riffeltäler der zweiten Riffelwalze eingreifen, während die Riffelzähne der zweiten Riffelwalze in die Riffeltäler der ersten Riffelwalze eingreifen; wobei eine Steigungsrichtung der Schrägverzahnung der ersten Riffelwalze einer Steigungsrichtung der Schrägverzahnung der zweiten Riffelwalze entgegengesetzt ist, wobei vorzugsweise mindestens die erste Riffelwalze beheizbar ist, und wobei die Vorrichtung ferner vorzugsweise eine Leimauftragseinrichtung zum Auftragen von Leim auf Spitzen einer Riffelung der der Wellpappenbahn sowie eine Anpresseinrichtung zum Anpressen einer Deckbahn an die mit Leim versehenen Spitzen der Wellpappenbahn aufweist.

Nachfolgend werden unter Bezugnahme auf die beigefügte Zeichnung bevorzugte Ausführungsformen der Erfindung beispielhaft beschrieben. Dabei zeigen:
- Fig. 1: eine schematische Ansicht eines Riffelwalzen-Rohlings und einer diesen bearbeitenden Bearbeitungsvorrichtung zur Durchführung eines erfindungsgemäßen Verfahrens,
- Fig. 2: im Wesentlichen eine stirnseitige Ansicht der in Fig. 1 veranschaulichten Bearbeitungsvorrichtung samt Riffelwalzen-Rohling,
- Fig. 3: eine schematische Ansicht eines Riffelwalzen-Rohlings und einer alternativen Bearbeitungsvorrichtung zur Durchführung eines erfindungsgemäßen alternativen Verfahrens,
- Fig. 4: eine schematische Ansicht, die das Erzeugen einer Riffelwalzen-Bombage zeigt,
- Fig. 5: eine schematische Ansicht, die eine Durchhangskompensation veranschaulicht,
- Figuren 6 bis 9: schematische Ansichten, die ein erfindungsgemäßes Verfahren zur Hinterschneidungskompensation veranschaulichen,
- Figuren 10, 11: schematische Ansichten einer Bearbeitungsvorrichtung und eines Riffelwalzen-Rohlings, die ein erfindungsgemäßes Verfahren zur Hinterschneidungskompensation zeigen,
- Fig. 12: eine schematische Ansicht eines Riffelwalzen-Rohlings und einer Bearbeitungsvorrichtung, wobei Bearbeitungseinrichtungen derselben in unterschiedlichen Verschleißzuständen dargestellt sind und ein erfindungsgemäßes Verfahren zur Hinterschneidungskompensation veranschaulicht ist,
- Fig. 13: eine schematische Ansicht eines Riffelwalzen-Rohlings und einer diesen bearbeitenden alternativen Bearbeitungsvorrichtung zur Durchführung eines erfindungsgemäßen alternativen Verfahrens,
- Fig. 14: das in Fig. 13 gekennzeichnete Detail in vergrößertem Maßstab,
- Fig. 15: eine schematische Ansicht eines Riffelwalzen-Rohlings und einer diesen bearbeitenden alternativen Bearbeitungsvorrichtung zur Durchführung eines erfindungsgemäßen alternativen Verfahrens,
- Fig. 16: eine schematische Ansicht eines Riffelwalzen-Rohlings und einer diesen bearbeitenden alternativen Bearbeitungsvorrichtung zur Durchführung eines erfindungsgemäßen alternativen Verfahrens,
- Fig. 17: eine schematische Ansicht eines Riffelwalzen-Rohlings und einer diesen bearbeitenden alternativen Bearbeitungsvorrichtung zur Durchführung eines erfindungsgemäßen alternativen Verfahrens, und
- Fig. 18: eine schematische Ansicht eines Riffelwalzen-Rohlings und einer diesen bearbeitenden alternativen Bearbeitungsvorrichtung zur Durchführung eines erfindungsgemäßen alternativen Verfahrens

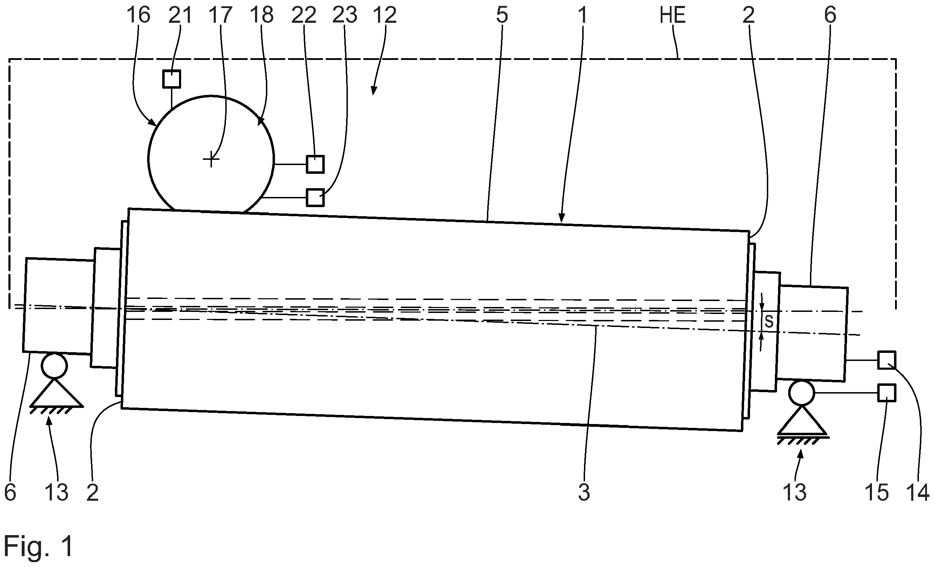

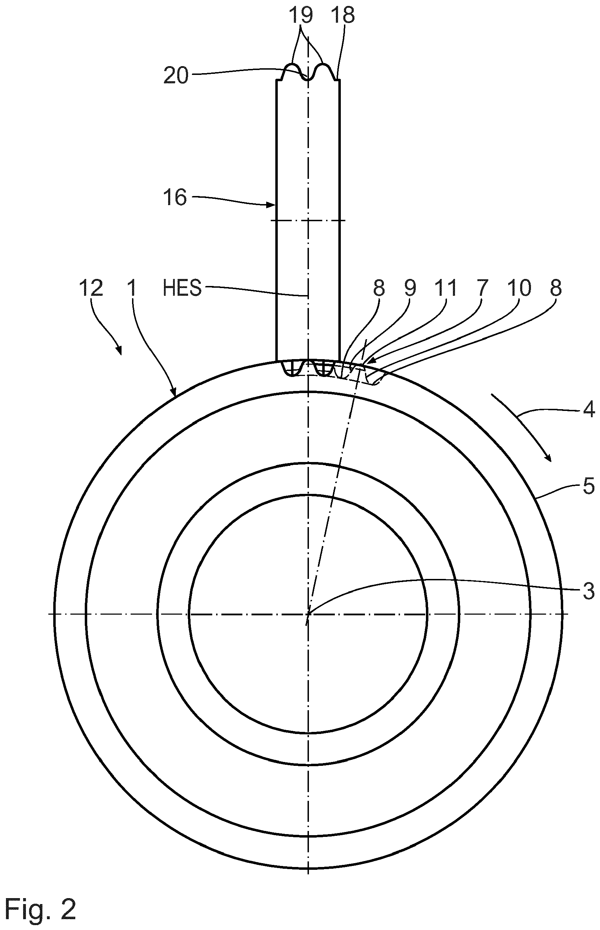

Zunächst bezugnehmend auf Figuren 1, 2 hat ein dort dargestellter Riffelwalzen-Rohling 1 als Ausgangskörper zur Herstellung einer Riffelwalze zwei einander gegenüberliegende, stirnseitige Enden 2 und eine Riffelwalzen-Rohling-Mittellängsachse 3, die mit einer Drehachse bzw. Mittellängsachse der fertigen bzw. einsetzbaren Riffelwalze zusammenfällt. Der Riffelwalzen-Rohling 1 weist außerdem um die Riffelwalzen-Rohling-Mittellängsachse 3 eine Umfangsrichtung 4 auf, die zum Beispiel mit einer Drehrichtung der Riffelwalze im Einsatz zusammenfällt.

Der Riffelwalzen-Rohling 1 hat ferner einen zylindrischen Riffelwalzen-Rohling-Walzenkörper 5. Außerdem umfasst er zwei endseitige, miteinander fluchtende Lagerzapfen 6 zur Lagerung der Riffelwalze.

Die fertige Riffelwalze hat eine Vielzahl äußerer Riffelzähne, die umfangsseitig angeordnet sind. Zwischen benachbart angeordneten Riffelzähnen liegen Riffeltäler vor. Wie Fig. 2 zeigt, hat der Riffelwalzen-Rohling 1 an seinem Riffelwalzen-Rohling-Walzenkörper 5 einen Riffelzahn, dem das Bezugszeichen 7 zugeordnet ist. Der Riffelzahn 7 ist zwischen zwei Riffeltälern angeordnet, denen das Bezugszeichen 8 zugeordnet ist.

Benachbarte Riffelzähne 7 verlaufen parallel zueinander und haben einen identischen Abstand in der Umfangsrichtung 4 zueinander. Sie sind bevorzugt identisch ausgeführt und gleichmäßig über den Umfang verteilt. Auch benachbarte Riffeltäler 8 erstrecken sich parallel zueinander und haben einen identischen Abstand in der Umfangsrichtung 4 zueinander. Sie sind vorzugsweise identisch ausgebildet und weisen einen identischen Abstand zueinander auf. Sie sind gleichmäßig über den Umfang verteilt. Die Riffelzähne 7 und Riffeltäler 8 bilden eine Außenverzahnung aus. Sie schließen mit der Mittellängsachse 3 der Riffelwalze einen Schrägungswinkel s ein, der zwischen 0,5° und 8° liegt (siehe Fig. 1). Die Verzahnung bildet so eine Schrägverzahnung, insbesondere Außen-Schrägverzahnung.

Wie Fig. 2 zeigt, hat der bzw. jeder Riffelzahn 7 eine erste Flanke 9 und eine dieser gegenüberliegende zweite Flanke 10 sowie einen zwischen diesen angeordneten Kopf 11. Jeder Kopf 11 ist bezogen auf die Mittellängsachse 3 der Riffelwalze konvex gekrümmt. Er hat bevorzugt eine konstante Krümmung. Die Flanken 9, 10 verlaufen (im Wesentlichen) zum Beispiel zumindest bereichsweise gerade.

Die Riffeltäler 8 weisen vorzugsweise jeweils eine konstante Krümmung auf. Sie sind bezogen auf die Mittellängsachse 3 konkav gekrümmt.

Zur Bearbeitung des Riffelwalzen-Rohlings 1 bzw. zur Herstellung der Riffelwalze aus dem Riffelwalzen-Rohling 1 dient eine Bearbeitungsvorrichtung 12, die in Figuren 1, 2 stark vereinfacht dargestellt ist.

Die Bearbeitungsvorrichtung 12 hat eine Halteeinrichtung 13 zum Halten des Riffelwalzen-Rohlings 1, bevorzugt an dessen Lagerzapfen 6, während der Bearbeitung. Sie hält den Riffelwalzen-Rohling 3 vorzugsweise dabei derart, dass dieser sich horizontal erstreckt. Die Halteeinrichtung 13 ist beispielsweise von einem Gestell der Bearbeitungsvorrichtung 12 gehalten.

Ferner weist die Bearbeitungsvorrichtung 12 bevorzugt einen Schwenkantrieb 14 auf, der mit dem Riffelwalzen-Rohling 1 in direkter oder indirekter Antriebsverbindung steht und imstande ist, den Riffelwalzen-Rohling 1, bevorzugt kontinuierlich, während der Bearbeitung in der Umfangsrichtung 4 bzw. entgegen dieser um die Riffelwalzen-Rohling-Mittellängsachse 3 zu schwenken.

Die Bearbeitungsvorrichtung 12 umfasst außerdem eine Schrägstelleinrichtung 15, die bevorzugt mit der Halteeinrichtung 13 in direkter oder indirekter Antriebsverbindung steht. Die Schrägstelleinrichtung 15 ist bevorzugt imstande, die Halteeinrichtung 13 bzw. den zu bearbeitenden Riffelwalzen-Rohling 1 gegenüber einer vertikalen Bearbeitungsvorrichtungs-Hauptebene bzw. -Nullebene schrägzustellen. Sie hat bevorzugt zumindest einen Schrägstellantrieb. Der Riffelwalzen-Rohling 1 ist so senkrecht zu seiner Riffelwalzen-Rohling-Mittellängsachse 3 auslenkbar bzw. verkippbar.

Die Bearbeitungsvorrichtung 12 hat außerdem eine Bearbeitungseinrichtung 16, die hier als Schleifscheibe ausgeführt ist. Die Schleifscheibe 16 ist kreisscheibenartig und weist eine zentrale Rotationsachse 17 auf. Sie ist um die Rotationsachse 17 drehantreibbar.

Die Schleifscheibe 16 umfasst an ihrem freien Umfangsbereich 18 mindestens einen Schleifvorsprung 19, bevorzugt mindestens zwei benachbart zueinander angeordnete, identische Schleifvorsprünge 19, der/die jeweils umlaufend ist/sind und sich um die Rotationsachse 17 erstreckt/erstrecken. Die Schleifvorsprünge 19, sofern mehrere vorhanden, sind in Richtung der Rotationsachse 17 gleichmäßig axial beabstandet zueinander angeordnet. Jeder Schleifvorsprung 19 hat einen abgerundeten äußeren Schleifkopf, der bezogen auf die Rotationsachse 17 konvex gekrümmt ist. Beispielsweise weist die Schleifscheibe 16 zwei oder drei Schleifvorsprünge 19 auf.

Zwischen benachbart angeordneten Schleifvorsprüngen 19, sofern mehrere vorhanden, hat die Schleifscheibe 16 jeweils eine umlaufende Schleifrinne 20 mit einem jeweiligen abgerundeten inneren Grund. Jede Schleifrinne 20 verjüngt sich zu ihrem jeweiligen Grund. Jeder Grund ist jeweils bezogen auf die Rotationsachse 17 konkav gekrümmt.

Der Schleifvorsprung 19 bzw. die Schleifvorsprünge 19 bzw. die Schleifrinne/n 20 ist/sind in Größe und Form sowie Anordnung derart, dass er/sie zur Bildung der Riffelzähne 7 bzw. Riffeltäler 8 geeignet ist/sind.

Die Schleifscheibe 16 ist in Bezug auf die Riffelwalzen-Rohling-Mittellängsachse 3 radial verlagerbar, insbesondere geführt radial verlagerbar, zum Beispiel vertikal oder horizontal verlagerbar. Sie ist so in ihrem (radialen) Abstand zu der Riffelwalzen-Rohling-Mittellängsachse 3 verstellbar. Die Bearbeitungsvorrichtung 12 hat dafür einen Verlagerungsantrieb 21, der mit der Schleifscheibe 16 in direkter oder indirekter Antriebsverbindung steht.

Die Schleifscheibe 16 ist ferner zwischen den Enden 2 des Riffelwalzen-Rohlings 1 verlagerbar. Sie ist entlang des Riffelwalzen-Rohlings 1 verlagerbar. Die Bearbeitungsvorrichtung 12 weist dazu einen Verlagerungsantrieb 22 auf, der mit der Schleifscheibe 16 in direkter oder indireker Antriebsverbindung steht. Sie hat ferner eine Gerad-Führung, entlang welcher ein Schlitten verlagerbar ist. Der Schlitten hält, direkt oder indirekt, die Schleifscheibe 16. Die Gerad-Führung erstreckt sich in einer vertikalen Bearbeitungsvorrichtungs-Hauptebene HE bzw. -Nullebene bzw. parallel zu dieser.

Die Schleifscheibe 16 ist um ihre Rotationsachse 17 in Rotation versetzbar. Die Bearbeitungsvorrichtung 12 umfasst dafür einen Rotationsantrieb 23, der mit der Schleifscheibe 16 in direkter oder indirekter Antriebsverbindung steht.

Für die Herstellung der Riffelwalze bzw. die Erzeugung der Schrägverzahnung an dem Riffelwalzen-Rohling 1 wird zunächst der von der Halteeinrichtung 13 gehaltene Riffelwalzen-Rohling 1 mittels der Schrägstelleinrichtung 15 entsprechend einem Sollversatz der Schrägverzahnung der Riffelwalze gegenüber der Riffelwalzen-Rohling-Mittellängsachse 3 bzw. dem Schrägungswinkel s schräg gestellt. Der Riffelwalzen-Rohling 1 ist so in der Halteeinrichtung 13 schräg gegenüber der Bearbeitungsvorrichtungs-Hauptebene HE schräg gestellt. Die Schleifscheibe 16 liegt zum Beispiel in der Bearbeitungsvorrichtungs-Hauptebene HE oder verläuft parallel zu dieser.

Anschließend wird die Schleifscheibe 16 in ihre Bearbeitungsposition bzw. Schleifposition mittels des Verlagerungsantriebs 21 benachbart zu einem Ende 2 gebracht. Wenn sich die Schleifscheibe 16 in ihrer Schleifposition befindet, greifen die Schleifvorsprünge 19, sofern mehrere vorhanden, bzw. der mindestens eine Schleifvorsprung 19 der mittels des Rotationsantriebs 23 in Rotation versetzten Schleifscheibe 16 an dem Riffelwalzen-Rohling 1 schleifend an. Dabei entsteht ein spanender Materialantrieb.

Die Schleifscheibe 16 wird längs des mindestens einen zu erzeugenden Riffelzahns 7 in Richtung auf das entfernte Ende 2 mittels des Verlagerungsantriebs 22 mittels/entlang der Gerad-Führung verlagert. Dabei schwenkt der Schwenkantrieb 14 den Riffelwalzen-Rohling 1 um seine Riffelwalzen-Rohling-Mittellängsachse 3 entsprechend. Der Riffelwalzen-Rohling 1 wird passend zu dem Schrägungswinkel s verschwenkt, damit der zu erzeugende Riffelzahn 7 stets senkrecht zu einer Mitte des Riffelwalzen-Rohlings 1 steht. Vorzugsweise wird der Riffelwalzen-Rohling 1 immer auf dem höchsten Punkt geschliffen.

Nach diesem ersten Schleifschritt wird der Riffelwalzen-Rohling 1 in seiner Umfangsrichtung 4 mittels des Schwenkantriebs 14 verschwenkt. Die Schleifscheibe 16 ist dabei von dem Riffelwalzen-Rohling 1 mittels des Verlagerungsantriebs 21 abgehoben. Der Riffelwalzen-Rohling 1 wird zum Beispiel dabei derart verschwenkt, dass in einem nächsten Schleifschritt ein erzeugter Riffelzahn 7 nochmals bearbeitet wird, um einen zusätzlichen Materialabtrag zu erzeugen. Alternativ wird dann mindestens ein Riffelzahn 7 neu erzeugt. Der Schleifvorgang wird dann zur Herstellung wiederholt.

Wie Fig. 2 zeigt, geht bei dem Schleifvorgang eine Hauptebene HES der Schleifscheibe 16 durch die Riffelwalzen-Rohling-Mittellängsachse 3. Die Hauptebene HES liegt in der Schleifscheibe 16 und erstreckt sich senkrecht zu der Rotationsachse 17. Hinterschneidungen sind reduzierbar bzw. vermeidbar.

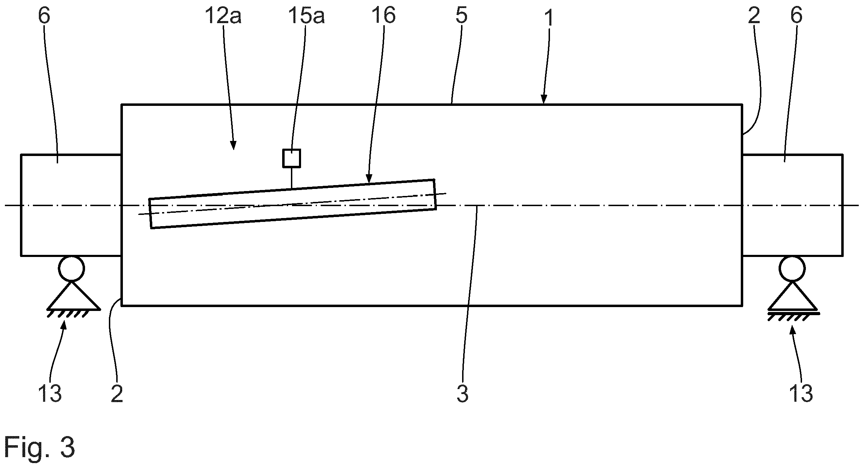

Nachfolgend wird unter Bezugnahme auf die Fig. 3 eine alternative Bearbeitungsvorrichtung 12a beschrieben. Identische Teile erhalten dieselben Bezugszeichen wie bei der vorherigen Ausführungsform, auf die hiermit explizit verwiesen wird. Konstruktiv unterschiedliche, jedoch funktionell gleichartige Teile erhalten die selben Bezugszeichen mit einem nachgeordneten "a".

Im Vergleich mit der vorherigen Ausführungsform hat die Bearbeitungsvorrichtung 12a keine Schrägstelleinrichtung 15, die mit der Halteeinrichtung 13 in direkter oder indirekter Antriebsverbindung steht. Dafür steht mit der Schleifscheibe 16 eine Schrägstelleinrichtung 15a in direkter oder indirekter Verbindung, die imstande ist, die Schleifscheibe 16 gegenüber dem Riffelwalzen-Rohling 1 bzw. der Riffelwalzen-Rohling-Mittellängsachse 3 schrägzustellen. Die Schleifscheibe 16 hat somit im Vergleich mit der vorherigen Ausführungsform einen zusätzlichen Freiheitsgrad.

Im Gegensatz zu der vorherigen Ausführungsform wird die Schleifscheibe 16 mittels der Schrägstelleinrichtung 15a entsprechend einem Sollversatz der Riffelwalzen-Schrägverzahnung bzw. dem Schrägungswinkel s eingestellt und anschließend in ihrer Schleifposition mehrmals in Richtung auf das entfernte Ende 2 des Riffelwalzen-Rohlings 1 längs bzw. mittels der Gerad-Führung unter Erzeugung der Schrägverzahnung verlagert. Dabei schwenkt der Schwenkantrieb 14 den Riffelwalzen-Rohling 1 um seine Riffelwalzen-Rohling-Mittellängsachse 3 entsprechend.

Wichtig auch hier ist wieder, dass die Hauptebene HES der Schleifscheibe 16 durch die Riffelwalzen-Rohling-Mittellängsachse 3 bei dem Schleifvorgang geht.

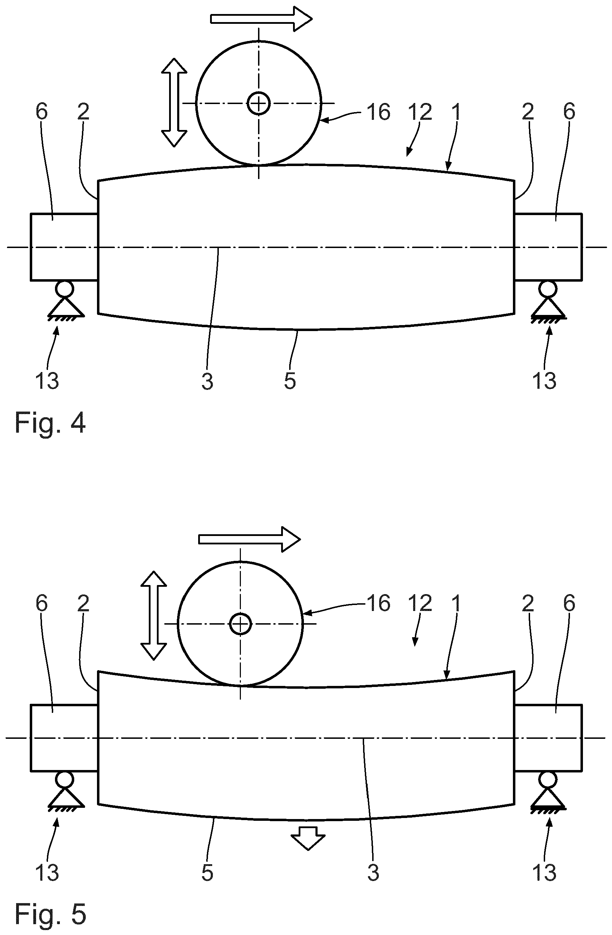

Wie Fig. 4 veranschaulicht, weist der Riffelwalzen-Rohling 1 eine Bombage auf. Dafür ist es erforderlich, dass die Schleifscheibe 16 mittels des Verlagerungsantriebs 21 bei der Erzeugung der Schrägverzahnung entsprechend der Bombage in ihrem Abstand zu der Riffelwalzen-Rohling-Mittellängsachse 3 verstellt wird. Die Schleifscheibe 16 folgt so im Wesentlichen der Außenform des Riffelwalzen-Rohlings 1.

Mittels des Verlagerungsantriebs 21 ist die Schleifscheibe 16 auch imstande, eine Durchhangskompensation durchzuführen (Fig. 5). Die Schleifscheibe 16 folgt so im Wesentlichen der Außenform des Riffelwalzen-Rohlings 1.

Um eine Hinterschneidung an der Schrägverzahnung der Riffelwalze zu kompensieren, wird bevorzugt eine entstehende Hinterschneidung an der Riffelwalze bei der Erzeugung eines individuellen Profils an der Schleifscheibe 16 berücksichtigt. Das Profil der Schleifscheibe 16 wird so ausgelegt bzw. ausgebildet, dass die zu erwartende Hinterschneidung an der Riffelwalze durch eine vorab ermittelte bogenförmige Projektion kompensiert wird. Eine Kompensation erfolgt derart, dass letztendlich trotzdem eine auf der Riffelwalze zu erreichende Profilform nach der Schleifbearbeitung erreichbar ist.

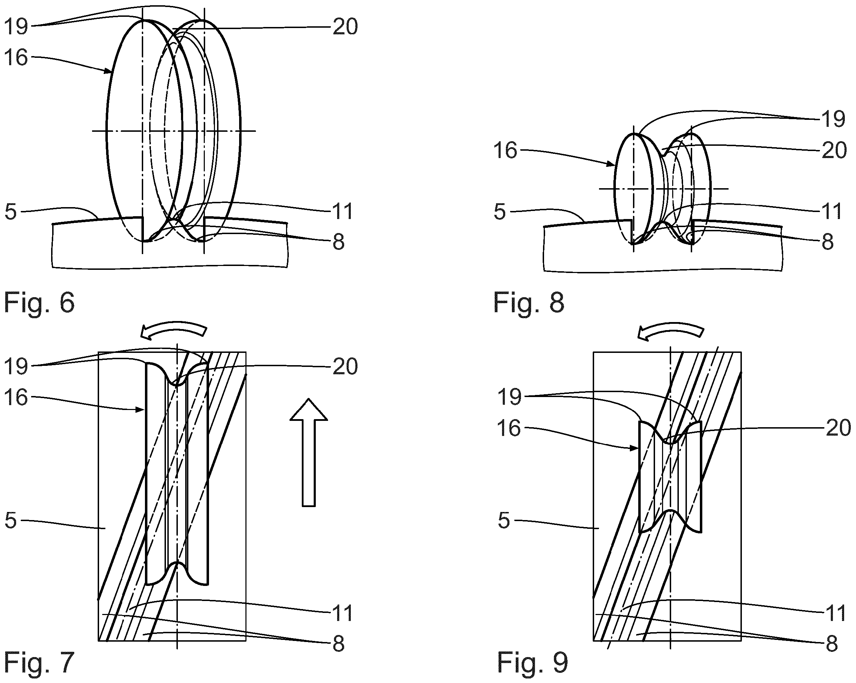

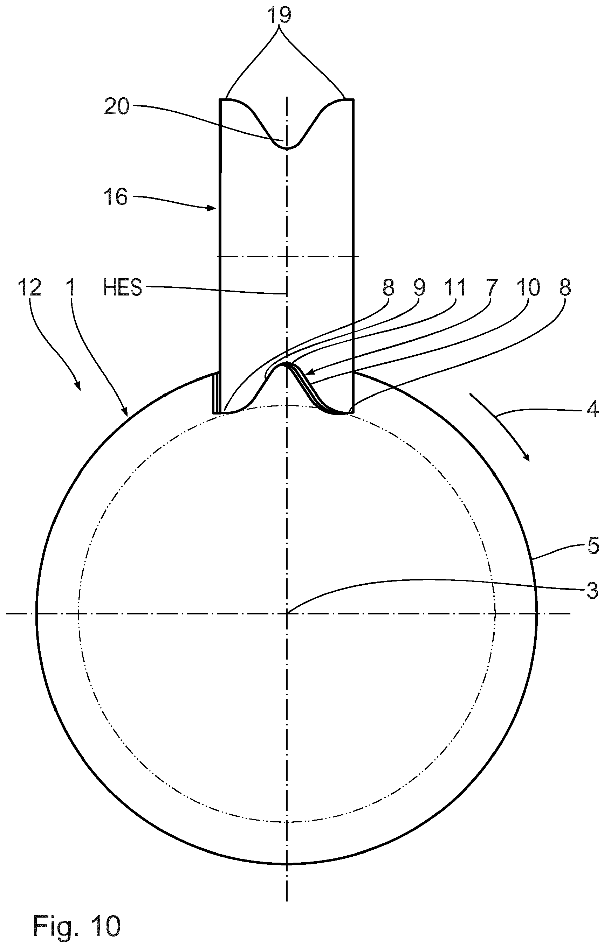

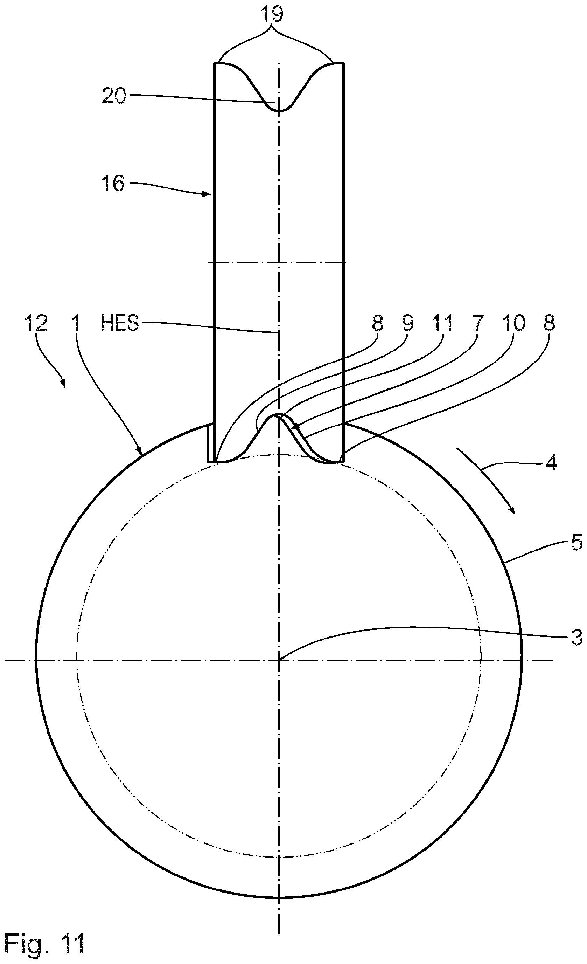

Wie Figuren 6 bis 12 veranschaulichen, steht bei dem Schleifvorgang ein umfangsseitiger Angriffsbereich der Schleifscheibe 16 nicht parallel zu der Rotationsachse 17, sondern schräg zu dieser. Eine Schrägstellung des Angriffsbereichs ist von der Schrägverzahnung der Riffelwalze bzw. dem Schrägungswinkel s abhängig. Sie definiert sich durch einen lotrechten Punkt in Belagstärkenmitte sowie in Längsrichtung des Riffelwalzen-Rohlings 1 verschobenen Angriffspunkten an jeweiligen Schleifscheibenrändern. Es ist erforderlich, eine individuelle Profilgestaltung über einen durch Maschinenachsen realisierten Abrichtvorgang zu gewährleisten. Es ist zweckmäßig, wenn für die Hinterschneidungskompensation jede Schleifrinne 20 nicht spiegelsymmetrisch, sondern asymmetrisch ausgeführt ist. Die die jeweilige Schleifrinne 20 begrenzenden Schleifvorsprünge 19 sind beispielsweise entsprechend unterschiedlich ausgeführt (Fig. 6 bis 11).

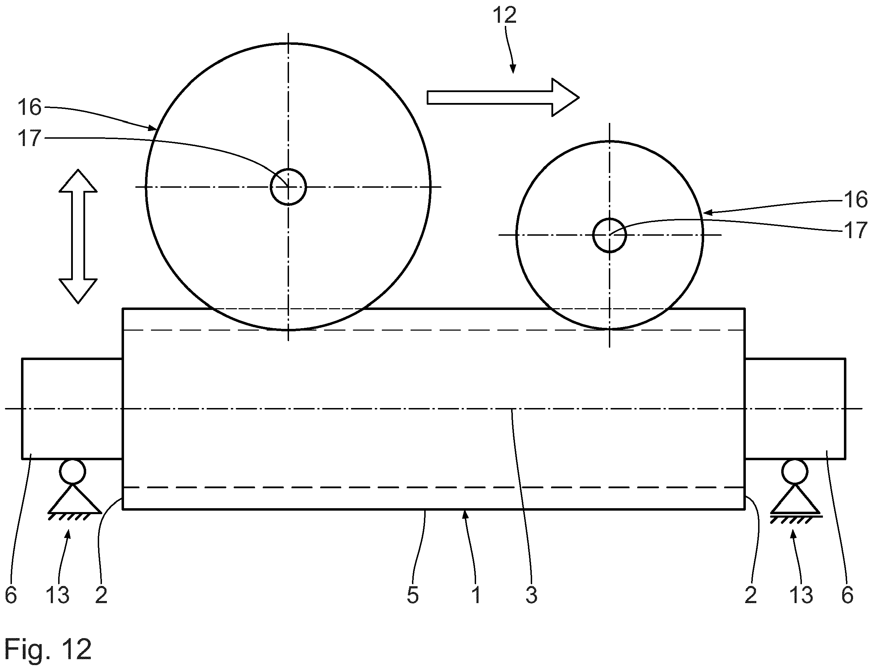

Eine Profilform ist abhängig von einem aktuellen Schleifscheibendurchmesser, was eine kontinuierliche Anpassung erforderlich macht. Insbesondere ist die Ausgestaltung der Schleifrinne/n 20 bzw. der Schleifvorsprünge 19 von dem aktuellen Durchmesser der Schleifscheibe 16 abhängig. Wie beispielsweise Fig. 12 zeigt, nimmt der Durchmesser der Schleifscheibe 16 aufgrund von Verschleiß während des Schleifvorgangs ab, sodass sich deren Eingriff in Bezug auf ihren Durchmesser ändert.

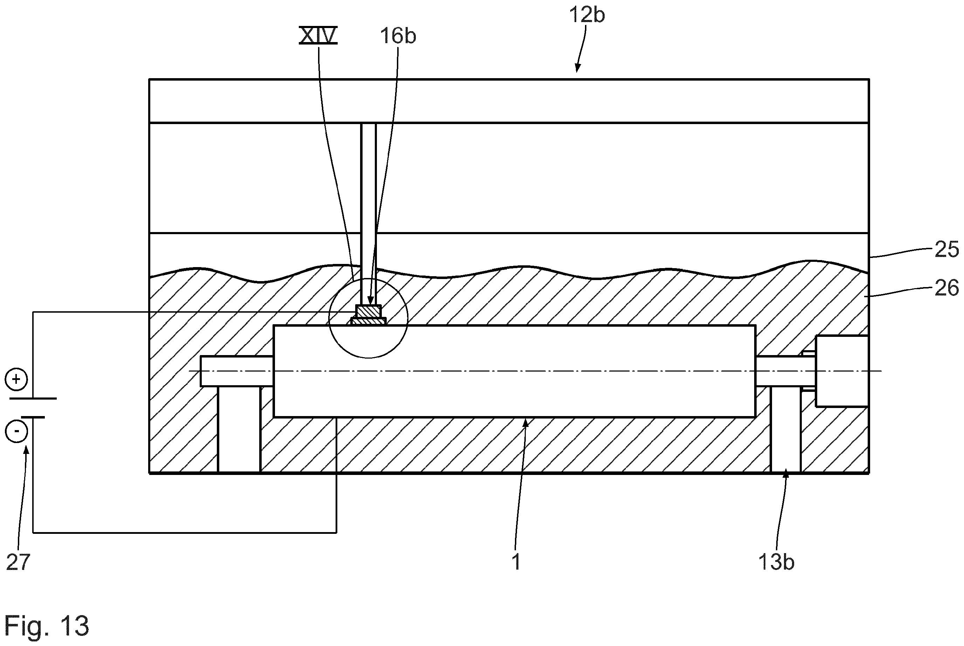

Nachfolgend wird unter Bezugnahme auf Fig. 13 eine alternative Bearbeitungsvorrichtung 12b beschrieben. Identische Teile erhalten dieselben Bezugszeichen wie bei den Ausführungsformen gemäß Figuren 1, 2 bzw. 3, auf deren Beschreibung hiermit explizit verwiesen wird. Konstruktiv unterschiedliche, jedoch funktionell gleichartige Teile erhalten dieselben Bezugszeichen mit einem nachgeordneten "b".

Im Vergleich mit der Ausführungsform gemäß Figur 3 befindet sich die Halteeinrichtung 13b in einem Becken 25 der Bearbeitungsvorrichtung 12b. Bei der Bearbeitung befindet sich der Riffelwalzen-Rohling 1 ebenfalls in dem Becken 25. Das Becken 25 ist mit einem Dielektrikum 26 befüllt, das bei der Bearbeitung des Riffelwalzen-Rohlings 1 den Riffelwalzen-Rohling 1 vollständig umgibt.

Die Bearbeitungseinrichtung 16b ist als Erodierelektrode ausgeführt. Die Erodierelektrode 16b und der Riffelwalzen-Rohling 1 stehen jeweils über ein elektrisches Kabel mit einer Gleichstromquelle 27 in elektrischer Verbindung. Der Riffelwalzen-Rohling 1 wirkt als Kathode, während die Bearbeitungseinrichtung 16b als Anode wirkt.

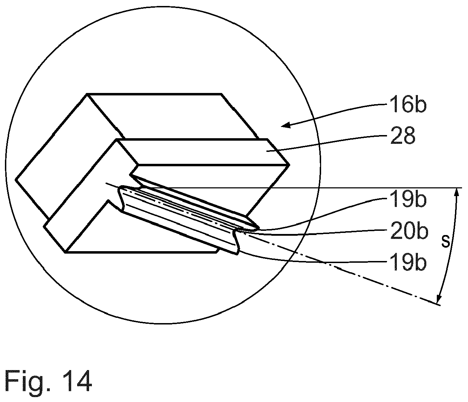

Wie Fig. 14 zeigt, hat die Erodierelektrode 16b zwei Erodiervorsprünge 19b und eine zwischen diese angeordnete Erodierrinne 20b. Eine andere Anzahl von Erodiervorsprüngen 19b und Erodierrinnen 20b ist alternativ möglich. Die Erodierelektrode 16b bildet wieder eine Negativform. Die Schleifvorsprünge 19b und Schleifrinne 20b erstrecken sich zum Beispiel schräg zu einem zugeordneten Tragkörper 28. Die Schrägstellung entspricht der Schrägverzahnung bzw. dem Schrägungswinkel s.

Bei dem Erodiervorgang zur Erzeugung der Schrägverzahnung wird die Erodierelektrode 16b an den Riffelwalzen-Rohling 1 herangeführt. Es werden elektrische Entladevorgänge zwischen dem Riffelwalzen-Rohling 1 und der Erodierelektrode 16b herbeigeführt, wodurch Material des Riffelwalzen-Rohlings 1 punktuell aufschmilzt und verdampft. Die Erodierelektrode 16b wird zur Bildung der Schrägverzahnung entsprechend zwischen den Enden 2 längs bzw. mittels der Gerad-Führung mehrfach verlagert. Der Riffelwalzen-Rohling 1 wird dabei verschwenkt. Wenn eine Konturelektrode eingesetzt wird, ist der Profilwinkel entsprechend zu berücksichtigen.

Das Erzeugen der Schrägverzahnung mittels Erodieren kann analog wie das Erzeugen der Schrägverzahnung mittels Schleifen erfolgen, wobei jedoch anstatt der Schleifscheibe eine Erodierelektrode eingesetzt wird. Während des Erodierens wird der Riffelwalzen-Rohling 1 verschwenkt, um eine Profilschrägung zu erzeugen.

Ein Erodieren erfolgt beispielsweise als Nachbearbeitung eines Schruppvorgangs, der mittels Fräsen erstellt worden ist. Nach dem Schruppen erfolgt das Härten des Riffelwalzen-Rohlings 1 und anschließend das Schlichten mittels Erodieren in die gehärtete Oberfläche. Vorzugsweise wird ein Senkerodieren oder 3D-Erodierfräsen eingesetzt, wenn das Fräsen und das Erodieren auf der gleichen Bearbeitungsvorrichtung 12b stattfinden. Das Senkerodieren kann über Konturelektroden erfolgen, wobei auch mehrere Konturelektroden über den Umfang des Riffelwalzen-Rohlings 1 einsetzbar sind.

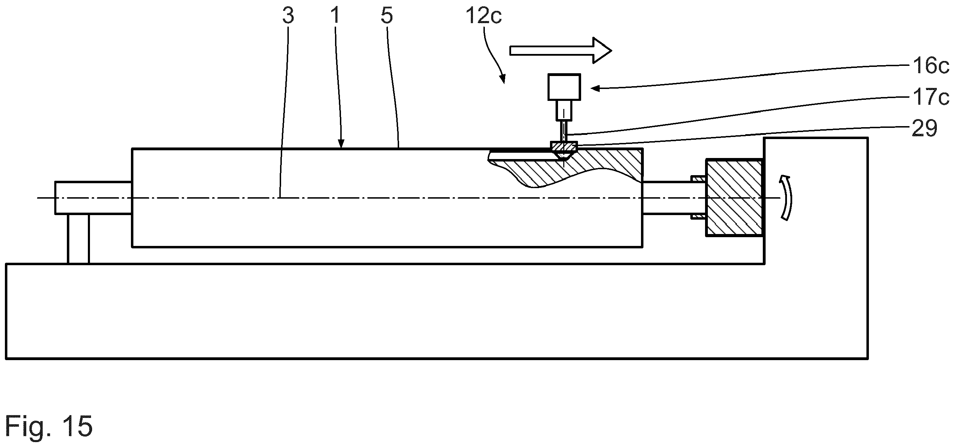

Nachfolgend wird unter Bezugnahme auf Fig. 15 eine alternative Ausführungsform der Bearbeitungsvorrichtung 12c beschrieben. Identische Teile erhalten dieselben Bezugszeichen wie bei den vorherigen Ausführungsformen, auf deren Beschreibung verwiesen wird. Konstruktiv unterschiedliche, jedoch funktionell gleichartige Teile erhalten dieselben Bezugszeichen mit einem nachgeordneten "c".

Im Vergleich mit den vorherigen Ausführungsformen ist hier die Bearbeitungseinrichtung 16c als Fräseinrichtung ausgeführt, die einen sich zu seinem freien Ende hin verjüngenden Fräskopf 29 hat. Der Fräskopf 29 ist entsprechend der Schrägverzahnung, insbesondere entsprechend mindestens eines Riffelzahns 7 und/oder Riffeltals 8, ausgeführt. Bevorzugt kommt ein Mehrachs-Simultanfräsen zum Einsatz.

Der Fräskopf 29 wird zur Erzeugung der Schrägverzahnung in Rotation um seine Mittelachse bzw. Rotationsachse 17 versetzt und zum Beispiel entlang bzw. mittels der Gerad-Führung mehrfach verlagert. Der Riffelwalzen-Rohling 1 wird bevorzugt entsprechend verschwenkt. Die Rotationsachse 17 erstreckt sich vorzugsweise zumindest zeitweise in Richtung auf die Riffelwalzen-Rohling-Mittellängsachse 3.

Eine Grobzerspanung geschieht günstigerweise in einem ungehärteten Zustand des Riffelwalzen-Rohlings 1 über ein Mehrachs-Simultanfräsen mit dem Fräskopf 29. Anschließend wird der mit einer Schrägverzahnung versehene Riffelwalzen-Körper 1 induktiv gehärtet. Fortlaufend folgt ein mehrachssimultanes Hartfräsen an dem Riffelwalzen-Rohling 1 zur Schlichtbearbeitung. Wahlweise kann ein Läppen in einem Walzeneinlaufgestell erfolgen, um Fräsmarken zu egalisieren. Eine Programmierung des Fräskopfs 29 erfolgt bevorzugt über ein dreidimensionales Modell der Riffelwalze.

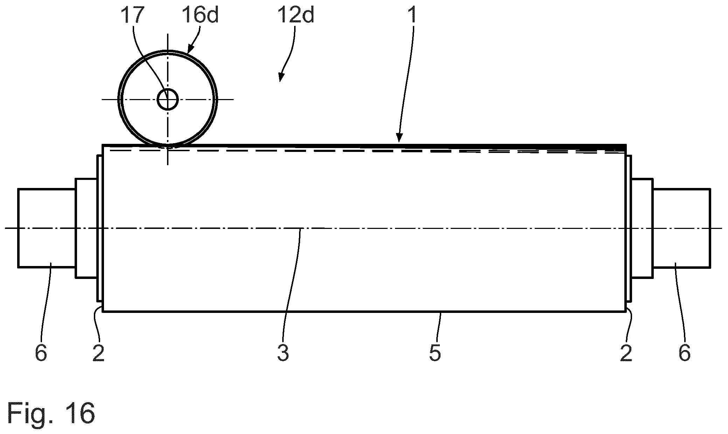

Nachfolgend wird unter Bezugnahme auf Fig. 16 eine alternative Bearbeitungseinrichtung 16d beschrieben. Identische Teile erhalten dieselben Bezugszeichen wie bei den vorherigen Ausführungsformen, auf deren Beschreibung explizit verwiesen wird. Konstruktiv unterschiedliche, jedoch funktionell gleichartige Teile erhalten dieselben Bezugszeichen mit einem nachgeordneten "d".

Die Bearbeitungseinrichtung 16d ist hier als Abwälzkörper bzw. Wälzkörper ausgeführt. Der Abwälzkörper 16d ist beispielsweise eine Schnecke, bevorzugt mit Spannnuten, und bildet mit dem Riffelwalzen-Rohling 1 ein Schneckengetriebe. Eine profilabhängige Erstellung der Bearbeitungseinrichtung 16d ist notwendig.

Der Abwälzkörper 16d wird zur Erzeugung der Schrägverzahnung in Rotation um seine Rotationsachse 17 versetzt und entlang/mittels der Gerad-Führung mehrfach verlagert. Der Riffelwalzen-Rohling 1 wird bevorzugt entsprechend verschwenkt.

Vorzugsweise erfolgt vor einem Härten des Riffelwalzen-Rohlings 1 ein Schruppvorgang. Günstigerweise erfolgt danach eine Schlichtbearbeitung. Wahlweise erfolgt ein Läppen, zum Beispiel in einem Walzeneinlaufgestell.

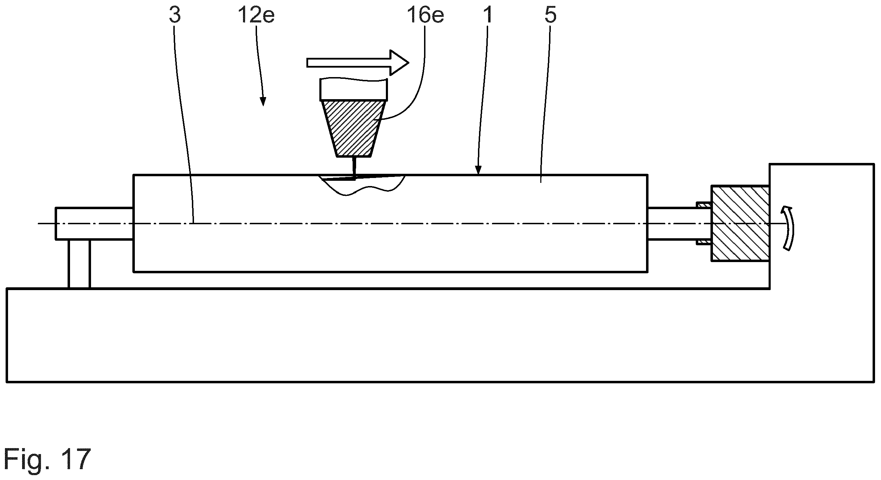

Nachfolgend wird unter Bezugnahme auf Fig. 17 eine alternative Bearbeitungsvorrichtung 12e beschrieben. Identische Teile erhalten dieselben Bezugszeichen wie bei den vorherigen Ausführungsformen, auf deren Beschreibung explizit verwiesen wird. Konstruktiv unterschiedliche, jedoch funktionell gleichartige Teil erhalten dieselben Bezugszeichen mit einem nachgeordneten "e".

Die Bearbeitungseinrichtung 16e ist als Laserstrukturiereinrichtung ausgeführt, die imstande ist, eine Schrägverzahnung einzugravieren. Beispielsweise kommt ein UKP(Ultrakurz-Puls)-Laser zum Einsatz, da so ein Wärmeeintrag und somit eine Änderungen der Materialeigenschaften des Riffelwalzen-Rohlings 1 vermeidbar ist. Die Geometrie, die mittels der Bearbeitungseinrichtung 16e erzeugt wird, wird vorher numerisch erstellt und an eine Steuerung der Bearbeitungseinrichtung 16e weitergegeben. Eine Strahlführung erfolgt beispielsweise über eine Achssteuerung, welche eine Optik führt und/oder einen Scanner.

Der Riffelwalzen-Rohling 1 wird bevorzugt bei seiner Bearbeitung verschwenkt. Die Bearbeitungseinrichtung 16e wird günstigerweise mittels der Gerad-Führung mehrfach verlagert.

Es können mehrere Bearbeitungseinrichtungen 16e zum Einsatz kommen.

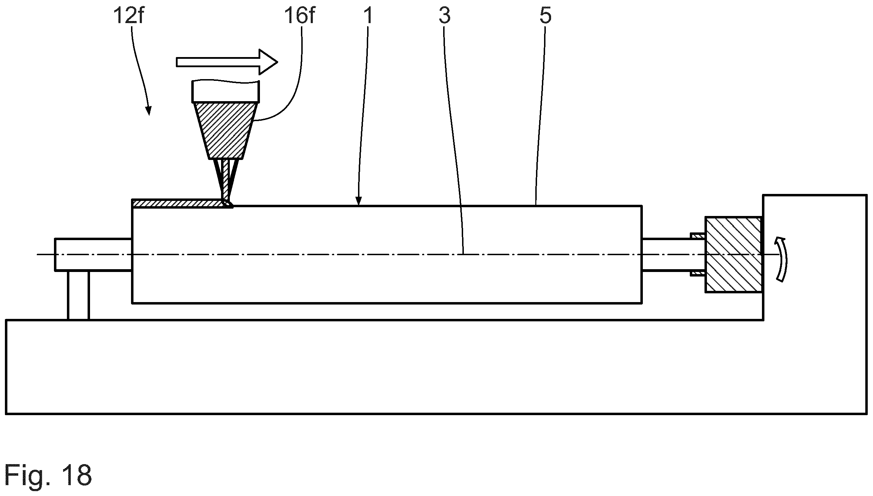

Nachfolgend wird unter Bezugnahme auf Fig. 18 eine alternative Bearbeitungsvorrichtung 12f beschreiben. Identische Teile erhalten dieselben Bezugszeichen wie bei den vorherigen Ausführungsformen, worauf verwiesen wird. Konstruktiv unterschiedliche, jedoch funktionell gleichartige Teile erhalten dieselben Bezugszeichen mit einem nachgeordneten "f".

Die Bearbeitungseinrichtung 16f ist hier als Lasercladdingeinrichtung ausgeführt. Die Schrägverzahnung wird auf den Riffelwalzen-Rohling 1 aufgebracht bzw. aufgetragen. Ein Zusatzmaterial ist in gängigen Formen, wie Pulver, Draht oder dergleichen, aufbringbar. Eine Kombination aus Aufschweißen und gezielter Änderung von Materialeigenschaften des Riffelwalzen-Rohlings 1 durch Wärmeeintrag und Zusatzmaterial ist möglich. Eine Geometrie, die die Bearbeitungseinrichtung 16f erzeugt, wird vorher numerisch erstellt und an eine Steuerung der Bearbeitungseinrichtung 16f und einer Strahlführung sowie einen Schweißkopf weitergegeben. Eine Strahlführung kann entweder über eine Achssteuerung, welche eine Optik führt, und/oder über einen Scanner erfolgen.

Der Riffelwalzen-Rohling 1 wird verschwenkt. Die Bearbeitungseinrichtung 16f wird günstigerweise mittels der Gerad-Führung mehrfach verlagert.

Beispielsweise kommen mehrere Bearbeitungseinrichtungen 16f zum Einsatz.

Kombinationen der genannten Ausführungsformen sind möglich.

## Patentansprüche

1. Verfahren zum Herstellen einer Riffelwalze mit einer Riffelzähne (7) aufweisenden Riffelwalzen-Schrägverzahnung, umfassend die Schritte
- Bereitstellen eines Riffelwalzen-Rohlings (1) mit einer Riffelwalzen-Rohling-Mittellängsachse (3), und
- Bearbeiten des Riffelwalzen-Rohlings (1) mittels einer mindestens eine Bearbeitungseinrichtung (16; 16b; 16c; 16d; 16e; 16f) aufweisenden Bearbeitungsvorrichtung (12; 12a; 12b; 12c; 12d; 12e; 12f) bei einer Relativverlagerung zwischen dem Riffelwalzen-Rohling (1) und der mindestens einen Bearbeitungseinrichtung (16; 16b; 16c; 16d; 16e; 16f) unter Erzeugung der Riffelwalzen-Schrägverzahnung.

2. Verfahren nach Anspruch 1, **gekennzeichnet durch**
- Ausrichten des Riffelwalzen-Rohlings (1) und der mindestens einen Bearbeitungseinrichtung (16; 16b; 16d) entsprechend einem Sollversatz der Riffelwalzen-Schrägverzahnung gegenüber der Riffelwalzen-Rohling-Mittellängsachse (3) relativ zueinander, und
- Verlagern des Riffelwalzen-Rohlings (1) und der mindestens einen Bearbeitungseinrichtung (16; 16b; 16d) relativ zueinander, wobei die mindestens eine Bearbeitungseinrichtung (16; 16b; 16d) bearbeitend an dem Riffelwalzen-Rohling (1) unter Erzeugung der Riffelwalzen-Schrägverzahnung angreift.

3. Verfahren nach Anspruch 1 oder 2, **gekennzeichnet durch** radiales Verlagern der mindestens einen Bearbeitungseinrichtung (16; 16b; 16c; 16d; 16e; 16f) und des Riffelwalzen-Rohlings (1) gegenüber der Riffelwalzen-Rohling-Mittellängsachse (3) relativ zueinander.

4. Verfahren nach einem der vorherigen Ansprüche, **dadurch gekennzeichnet, dass** für eine Hinterschneidungskompensation mindestens ein Angriffsbereich der mindestens einen Bearbeitungseinrichtung (16; 16d) an dem Riffelwalzen-Rohling (1) schräg zu einer jeweiligen Bearbeitungseinrichtungs-Rotationsachse (17) der mindestens einen Bearbeitungseinrichtung (16; 16d) steht.

5. Verfahren nach einem der vorherigen Ansprüche, **gekennzeichnet durch** Ausrichten der mindestens einen Bearbeitungseinrichtung (16; 16d) und des Riffelwalzen-Rohlings (1) derart, dass die mindestens eine Bearbeitungseinrichtung (16; 16d) stets senkrecht zu der Riffelwalzen-Rohling-Mittellängsachse (3) und mindestens ein Angriffsbereich der mindestens einen Bearbeitungseinrichtung (16; 16d) an dem Riffelwalzen-Rohling (1) stets senkrecht zu einer jeweiligen Bearbeitungseinrichtungs-Rotationsachse (17) der mindestens einen Bearbeitungseinrichtung (16; 16d) steht.

6. Verfahren nach einem der vorherigen Ansprüche, **gekennzeichnet durch**
- Schrägstellen des Riffelwalzen-Rohlings (1) entsprechend einem Sollversatz der Riffelwalzen-Schrägverzahnung gegenüber der Riffelwalzen-Rohling-Mittellängsachse (3), und
- Verlagern der mindestens einen Bearbeitungseinrichtung (16; 16d) entlang des Riffelwalzen-Rohlings (1), wobei die mindestens eine Bearbeitungseinrichtung (16; 16d) bearbeitend an dem Riffelwalzen-Rohling (1) angreift.

7. Verfahren nach einem der vorherigen Ansprüche, **gekennzeichnet durch**
- Schrägstellen der mindestens einen Bearbeitungseinrichtung (16; 16b; 16d) entsprechend einem Sollversatz der Riffelwalzen-Schrägverzahnung gegenüber der Riffelwalzen-Rohling-Mittellängsachse (3), und
- Verlagern der mindestens einen Bearbeitungseinrichtung (16; 16b; 16d) entlang des Riffelwalzen-Rohlings (1) unter Erzeugung der Riffelwalzen-Schrägverzahnung, wobei die mindestens eine Bearbeitungseinrichtung (16; 16b; 16d) bearbeitend an dem Riffelwalzen-Rohling (1) angreift.

8. Verfahren nach einem der vorherigen Ansprüche, **dadurch gekennzeichnet, dass** die mindesten eine Bearbeitungseinrichtung (16; 16c; 16d) eine spanende Bearbeitungseinrichtung zur spanenden Bearbeitung des Riffelwalzen-Rohlings (1) ist.

9. Verfahren nach Anspruch 8, **dadurch gekennzeichnet, dass** die mindestens eine Bearbeitungseinrichtung (16) eine Schleifeinrichtung zur schleifenden Bearbeitung des Riffelwalzen-Rohlings (1) ist.

10. Verfahren nach einem der Ansprüche 1 bis 8, **dadurch gekennzeichnet, dass** die mindestens eine Bearbeitungseinrichtung (16c; 16d) eine Fräseinrichtung zur fräsenden Bearbeitung des Riffelwalzen-Rohlings (1) ist.

11. Verfahren nach Anspruch 10, **dadurch gekennzeichnet, dass** die Fräseinrichtung (16c) eine Simultanfräseinrichtung ist.

12. Verfahren nach Anspruch 10, **dadurch gekennzeichnet, dass** die Fräseinrichtung (16d) eine Abwälzfräseinrichtung ist.

13. Verfahren nach einem der Ansprüche 1 bis 7, **dadurch gekennzeichnet, dass** die mindestens eine Bearbeitungseinrichtung (16f) eine Auftragseinrichtung, insbesondere Laserauftragseinrichtung ist, die Material zur Erzeugung der Riffelwalzen-Schrägverzahnung auf den Riffelwalzen-Rohling (1) aufträgt.

14. Verfahren nach einem der Ansprüche 1 bis 7, **dadurch gekennzeichnet, dass** die Bearbeitungseinrichtung (16e) eine Laserabtragseinrichtung ist, die zur Erzeugung der Riffelwalzen-Schrägverzahnung Material von dem Riffelwalzen-Rohling (1) abträgt.

15. Verfahren nach einem der vorherigen Ansprüche, **gekennzeichnet durch** Erodieren des Riffelwalzen-Rohlings (1).

16. Vorrichtung (12) zum Bearbeiten einer Riffelwalze mit einer Riffelzähne (7) aufweisenden Riffelwalzen-Schrägverzahnung, aufweisend
- eine Halteeinrichtung (13) zum Halten eines Riffelwalzen-Rohlings (1) mit einer Riffelwalzen-Rohling-Mittellängsachse (3); und
- eine Bearbeitungseinrichtung (16) zum Erzeugen der Riffelwalzen-Schrägverzahnung, wobei die Halteeinrichtung und / oder die Bearbeitungseinrichtung eingerichtet sind, die Riffelwalzen-Schrägverzahnung bei einer Relativverlagerung zwischen dem Riffelwalzen-Rohling und der Bearbeitungseinrichtung zu erzeugen.

17. Vorrichtung nach Anspruch 16, wobei die Halteeinrichtung eingerichtet ist, den Riffelwalzen-Rohling während der Bearbeitung an dessen Lagerzapfen (6) zu halten, vorzugsweise dabei derart, dass sich der Riffelwalzen-Rohling horizontal erstreckt.

18. Vorrichtung nach einem der Ansprüche 16 bis 17, ferner aufweisend:
einen Schwenkantrieb (14), der mit dem Riffelwalzen-Rohling 1 in direkter oder indirekter Antriebsverbindung steht und eingerichtet ist, den Riffelwalzen-Rohling, bevorzugt kontinuierlich, während der Bearbeitung in einer Umfangsrichtung (4) um die Riffelwalzen-Rohling-Mittellängsachse zu schwenken.

19. Vorrichtung nach einem der Ansprüche 16 bis 18 ferner umfassend eine Schrägstelleinrichtung (15) zum Verkippen des Riffelwalzen-Rohling senkrecht zu seiner Riffelwalzen-Rohling-Mittellängsachse.

20. Vorrichtung nach Anspruch 19, wobei die Schrägstelleinrichtung mit der Halteeinrichtung in direkter oder indirekter Antriebsverbindung steht und dazu eingerichtet ist, den Riffelwalzen-Rohling gegenüber der vertikalen Bearbeitungsvorrichtungs-Hauptebene schrägzustellen, und wobei die Schrägstelleinrichtung vorzugsweise einen Schrägstellantrieb umfasst.

21. Riffelwalze zur Herstellung von Wellpappenbahnen umfassend:
- einen zylindrischen Riffelwalzenkörper (5);
- eine Riffelzähne (7) und Riffeltäler (8) aufweisenden Riffelwalzen-Schrägverzahnung, wobei die Riffelzähne und Riffeltäler mit einer Mittellängsachse (3) der Riffelwalze einen Schrägungswinkel einschließen, der zwischen 0,5° und 8° liegt und so eine Außen-Schrägverzahnung bildet.

22. Riffelwalze nach Anspruch 21, wobei benachbarte Riffelzähne (7) parallel zueinander verlaufen und einen identischen Abstand in einer Umfangsrichtung (4) zueinander aufweisen, und wobei die Riffelzähne bevorzugt identisch ausgeführt und gleichmäßig über den Umfang der Riffelwalze verteilt sind und / oder wobei sich benachbarte Riffeltäler parallel zueinander erstrecken und einen identischen Abstand in der Umfangsrichtung zueinander aufweisen, und wobei die Riffeltäler vorzugsweise identisch ausgebildet und gleichmäßig über den Umfang der Riffelwalze verteilt sind.

23. Riffelwalze nach einem der Ansprüche 21 bis 22, wobei jeder Riffelzahn eine erste Flanke (9) und eine der ersten Flanke gegenüberliegende zweite Flanke (10) sowie einen dazwischen angeordneten Kopf (11) aufweist, wobei jeder Kopf bezogen auf die Mittellängsachse der Riffelwalze konvex gekrümmt ist.

24. Riffelwalze nach Anspruch 23, wobei jeder Kopf eine konstante Krümmung aufweist und die ersten und zweiten Flanken im Wesentlichen zumindest bereichsweise gerade verlaufen und wobei die Riffeltäler bezogen auf die Mittellängsachse konkav gekrümmt sind und jeweils eine konstante Krümmung aufweisen.

25. Riffelwalze nach einem der Ansprüche 21 bis 24, wobei die Riffelwalzen-Schrägverzahnung mit dem Verfahren einem der Ansprüche 1 bis 15 und / oder der Vorrichtung einem der Ansprüche 16 bis 20 erzeugt wurde.

26. Vorrichtung zur Herstellung von Wellpappenbahnen aufweisend:
eine erste Riffelwalze nach einem der Ansprüche 21 bis 25 und eine zweite Riffelwalze nach einem der Ansprüche 21 bis 25, wobei die Riffelzähne der ersten Riffelwalze in die Riffeltäler der zweiten Riffelwalze eingreifen, während die Riffelzähne der zweiten Riffelwalze in die Riffeltäler der ersten Riffelwalze eingreifen;
wobei eine Steigungsrichtung der Schrägverzahnung der ersten Riffelwalze einer Steigungsrichtung der Schrägverzahnung der zweiten Riffelwalze entgegengesetzt ist, wobei vorzugsweise mindestens die erste Riffelwalze beheizbar ist, und
wobei die Vorrichtung ferner vorzugsweise eine Leimauftragseinrichtung zum Auftragen von Leim auf Spitzen einer Riffelung der der Wellpappenbahn sowie eine Anpresseinrichtung zum Anpressen einer Deckbahn an die mit Leim versehenen Spitzen der Wellpappenbahn aufweist.
